(19) Europäisches Patentamt
European Patent Office
Office européen des brevets

(11) EP 2 976 734 B1

(12) **EUROPEAN PATENT SPECIFICATION**

(45) Date of publication and mention
of the grant of the patent:
**18.09.2019 Bulletin 2019/38**

(51) Int Cl.:
$G06K\ 7/00$ (2006.01)     $G06K\ 19/07$ (2006.01)
$G06K\ 7/10$ (2006.01)

(21) Application number: **14769344.4**

(22) Date of filing: **21.03.2014**

(86) International application number:
**PCT/US2014/031462**

(87) International publication number:
**WO 2014/153516 (25.09.2014 Gazette 2014/39)**

(54) **AMBIENT BACKSCATTER TRANCEIVERS, APPARATUSES, SYSTEMS, AND METHODS FOR COMMUNICATING USING BACKSCATTER OF AMBIENT RF SIGNALS**

SENDER/EMPFÄNGER MIT UMGEBUNGSRÜCKSTREUUNG SOWIE VORRICHTUNGEN, SYSTEME UND VERFAHREN ZUR KOMMUNIKATION MITTELS RÜCKSTREUUNG VON HF-UMGEBUNGSSIGNALEN

ÉMETTEURS-RÉCEPTEURS À RÉTRODIFFUSION AMBIANTE, APPAREILS, SYSTÈMES, ET PROCÉDÉS POUR COMMUNIQUER EN UTILISANT UNE RÉTRODIFFUSION DE SIGNAUX RF AMBIANTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.03.2013 US 201361804520 P**

(43) Date of publication of application:
**27.01.2016 Bulletin 2016/04**

(73) Proprietor: **University of Washington Through Its Center for Commercialization
Seatlle, WA 98105-4605 (US)**

(72) Inventors:
• **GOLLAKOTA, Shyamnath**
**Seattle, WA 98122 (US)**
• **SMITH, Joshua R.**
**Seattle, WA 98112 (US)**
• **LIU, Vincent**
**Seattle, WA 98105 (US)**
• **PARKS, Aaron N.**
**Seattle, WA 98102 (US)**
• **TALLA, Vamsi**
**Seattle, WA 98105 (US)**

(74) Representative: **Schmitt-Nilson Schraud Waibel Wohlfrom
Patentanwälte Partnerschaft mbB
Pelkovenstraße 143
80992 München (DE)**

(56) References cited:
**US-A1- 2004 005 863**     **US-A1- 2006 082 458**
**US-A1- 2007 109 121**     **US-A1- 2008 131 133**
**US-B1- 6 243 012**     **US-B1- 6 745 008**

**Description**

Examples described herein are directed generally to wireless data transmission. In particular, examples are described that transmit data wirelessly by modulating a backscatter of an ambient RF signal.

Computing devices are increasingly embedded in objects and environments such as appliances, thermostats, books, furniture, and even implantable medical devices. A key issue is how to power these devices as they become smaller and numerous; wires are often not feasible, and batteries add weight, bulk, cost, and require recharging or replacement that adds costs and is difficult at large scales. Generating a conventional radio wave typically requires much more power than can be harvested from ambient RF signals. Traditional backscatter communication (e.g., RFID) provides a form of communicating by modulating reflections of an incident RF signal (e.g., rather than generating RF waves). Therefore, traditional backscatter transmission is orders of magnitude more energy-efficient than conventional radio communication. However, traditional backscatter communication requires deployment of a special purpose power infrastructure (e.g., an RFID reader) to transmit a high-power (1 W) signal to nearby devices, which the nearby devices use to backscatter. Additionally, traditional RFID systems, RFID tags must talk exclusively to an RFID reader and are unable to even sense the transmissions of other RFID tags.

US 2008/131133 A1 discloses a method and system for a device to embed a low signal to interference plus noise ratio (SINR) communications signal into the backscatter of an illuminating signal. The illuminating signal may be acoustic or electromagnetic (EM) such as radio frequency (RF), light, or infrared (IR). The embedded communications signal may be recovered at a desired receiver.

US 2007/109121 A1 discloses a system and device for harvesting various frequencies and polarizations of ambient radio frequency (RF) electromagnetic energy for making a passive sensor (tag) into an autonomous passive sensor (tag) adapted to collect and store data with time-stamping and some primitive computation when necessary even when an interrogating radio frequency identification (RFID) reader is not present (not transmitting).

The invention relates to a system and method according to the appended claims.

Examples of the present disclosure include systems, ambient backscatter transceivers, and methods. An example system comprises an ambient backscatter transceiver that includes an antenna that may be configured to receive a backscattered ambient radio frequency (RF) signal, and a demodulator coupled to the antenna. The demodulator may be configured to demodulate the backscattered ambient RF signal to retrieve first data. The backscattered ambient RF signal may be generated by backscattering an ambient RF signal at a first frequency. The ambient. RF signal may be configured to provide other data at a second frequency.

Examples of ambient backscatter transceivers may include an antenna configured to receive a backscattered ambient radio frequency (RF) signal. The backscattered ambient RF signal may be encoded with first data via backscatter modulation of an ambient RF signal at a first frequency. The ambient RF signal may be further modulated to provide second data at a second frequency. The example ambient backscatter transceiver may further include a receiver coupled to the antenna and configured to demodulate the backscattered ambient RF signal to generate output bits. The ambient backscatter transceiver may further include a microcontroller coupled to the receiver and configured to decode the output bits to retrieve data that is transmitted via the backscattered ambient RF signal.

An example method may include receiving a backscattered ambient radio frequency (RF) signal at an antenna. The backscattered ambient RF signal may be encoded with first data via backscatter modulation of an ambient RF signal at a first frequency and may be modulated to provide second data at a second frequency. The example method may further include demodulating the backscattered ambient RF signal to generate output bits. The example method may further include decoding the output bits at a microcontroller to retrieve the first data.

BRIEF DESCRIPTION OF THE DRAWINGS

Figure 1 is a block diagram of an ambient RF communication system including ambient RF transceivers according to an embodiment of the disclosure;

Figure 2 is a block diagram of an ambient RF transceiver according to an embodiment of the disclosure;

Figure 3 is a block diagram of a receiver of an ambient RF transceiver according to an embodiment of the disclosure; and

Figure 4 is a block diagram of a packet structure for using in the ambient RF communication system according an embodiment of the disclosure.

DETAILED DESCRIPTION

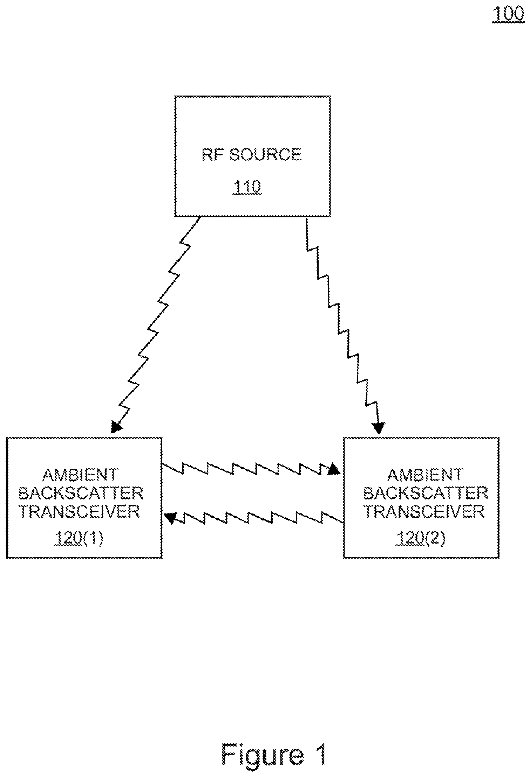

Certain specific details are set forth in the following description and in Figures 1-4 to provide a thorough understanding of various embodiments of the technology. Other details including well-known structures and systems often associated with sensors, transmitters, and receivers, have not been set forth in the following disclosure to avoid unnecessarily obscuring the description of the various embodiments of the technology. A person of ordinary skill in the art, therefore, will accordingly understand that the technology may have other embodiments with additional elements, or the technology may have other embodiments without several of the features shown and described below with reference to Figures 1-4.

Examples described herein include ambient backscatter transceivers that utilize radio frequency (RF) signals to communicate with each other and associated systems and methods. In several embodiments, for example, a system may include an ambient backscatter transceiver that is configured to transmit encoded data to a second ambient backscatter transceiver by modulating a backscatter of an ambient RF signal. The ambient backscatter transceivers may include low power circuitry for decoding the backscattered ambient RF signal, such as analog resistance-capacitance (RC) circuitry. In some embodiments, the ambient backscatter transceivers may include power harvest circuitry that harvests power from the ambient RF signal and provides the harvested power to power other circuitry of the ambient backscatter transceiver and/or other devices in communication with the harvested power. Ambient RF signals generally include any RF signals which may be received and backscattered by transceivers described herein. The RF signals may be present in the environment from other signal sources, e.g. the ambient RF signals may be generated by telephones, computers, appliances, transceivers, and/or other devices and may be received and backscattered by ambient backscatter transceivers described herein.

Ambient RF signals may generally include any ambient RF signal, such as a television transmission signal, a radio transmission signal, a cellular communication signal (e.g., form a base station or a mobile device), a WiFi signal, or any other RF signal. In some embodiments, the ambient RF signal may be a continuously provided RF signal, such as the television signal.

FIG. 1 is an illustrative example of an ambient backscatter communication system 100 according to an embodiment of the disclosure. The ambient backscatter system 100 may include a RF source 110 configured to provide a RF signal. The RF signal may include encoded data, such as television broadcast data, cellular communication data, WiFi network communication data, or any other data. The ambient backscatter system 100 may further include ambient backscatter transceivers 120(1-2) that are configured to communicate with each other by backscattering the RF signal (e.g., the ambient RF signal) from the RF source 110.

In an example operation where the ambient backscatter transceiver 120(1) transmits data to the ambient backscatter transceiver 120(2), the ambient backscatter transceiver 120(1) may modulate a backscatter of the ambient RF signal from the RF source 110 to provide a backscattered ambient RF signal encoded with the data to the ambient backscatter transceiver 120(2). The data transmitted by the ambient backscatter transceiver 120(1) may be related to data received from a sensor or an input, or may be related to data received from the ambient backscatter transceiver 120(2). The data transmitted by the ambient backscatter transceiver 120(1) may typically be different than the data which may be encoded in the ambient RF signal by the RF source 110.

Backscatter communication generally includes modulating reflection of an RF signal at an antenna, rather than generating an RF signal. The ambient RF signal used by the ambient backscatter transceiver 120(1) may include an ambient RF signal that is provided by the RF source 110 for another purpose, such as a television broadcast or cellular communication between a base station and a mobile device. In some examples, the backscattered ambient RF signal may be encoded with data using a modulation scheme. To generate the backscattered ambient RF signal, the ambient backscatter transceiver 120(1) may modulate the impedance of an antenna to alternate between two discrete states, e.g., reflecting and not-reflecting. The reflecting state of the antenna may provide a reflection of the ambient RF signal, and the non-reflecting state may not reflect the ambient RF signal. Thus, the ambient backscatter transceiver 120(1) may indicate either a '0' or a '1' bit by switching the state of the antenna between the reflecting and non-reflecting states. The ambient RF signal that is reflected by the ambient backscatter transceiver 120(1) may create an additional path (e.g., a backscattered ambient RF signal) from ambient backscatter transceiver 120(1) to the ambient backscatter transceiver 120(2). The ambient backscatter transceiver 120(2) may decode data encoded in the backscattered ambient. RF signal by sensing the reflected power level changes in the backscattered ambient RF signal by the ambient backscatter transceiver 120(1). Receivers associated with the RF source 110 (e.g., receivers for TV and cellular applications) may be designed to compensate for multi-path wireless channels to avoid interference of receiving the same signal via multiple paths, and thus may be able to account for (e.g., filter out) the backscattered ambient. RF signal from the ambient backscatter transceiver 120(1).

In order to decode the backscattered ambient RF signal to retrieve the data, the modulation frequency of the ambient RF signal may be greater than the modulated backscatter frequency of the backscattered ambient RF signal Switching the state of the antenna of the ambient backscatter transceiver 120(1) may include adjusting an impedance of the antenna. Generally, when a wave encouters a boundary between two media that have different impedances/densities, the wave gets reflected back. The amount of reflection is typically determined by the difference in the impedance values of the antenna. By modulating the electrical impedance at the antenna, the amount of incident RF energy that is scattered is modulated, thus enabling information to be transmitted. For example, in the reflecting state, the antenna may have low impedance (e.g., a short circuit) to a reference node and may reflect the ambient RF signal to provide a backscattered ambient RF signal that has a first signal amplitude. In the non-reflecting state, the antenna may have high impedance (e.g., an open circuit) to the reference node, and may reflect the ambient RF signal to provide a backscattered ambient RF signal that has a second signal amplitude. The first amplitude may be greater than the second amplitude. In some embodiments, the second amplitude has a nominal or near zero amplitude. The antenna may be designed for a frequency of a targeted ambient RF signal. The ambient backscatter transceiver 120(1) may modulate a backscatter of the ambient RF signal to provide the backscattered ambient RF signal at a lower frequency than the modulation frequency of the ambient RF signal. Because the ambient RF signal may already be included encoded data, by modulating a backscatter of the ambient RF signal at a lower frequency may improve reliability in decoding the backscattered ambient RF signal at the ambient backscatter transceiver 120(2).

The ambient backscatter transceiver 120(2) may receive the backscattered ambient RF signal from the ambient backscatter transceiver 120(1). Because the backscattered ambient RF signal is modulated by the ambient backscatter transceiver 120(2) at a lower rate than the ambient RF signal, the ambient backscatter transceiver 120(2) may separate the ambient RF signal from the backscattered ambient RF signal by leveraging the difference in communication rates. For example, the ambient backscatter transceiver 120(2) may extract the data of the backscattered ambient RF signal using averaging mechanisms. Amplitude of the ambient RF signal changes at a fast rate, and hence adjacent samples in the ambient RF signal tend to be more uncorrelated than adjacent samples in the backscattered ambient RF signal. Thus, averaging the received backscattered ambient RF signal across multiple samples of the ambient RF signal, may effectively remove the variations in the ambient RF signal, allowing the data encoded in the backscattered ambient RF signals to be decoded.

While Figure 1 depicts two ambient backscatter transceivers 120(1-2), the ambient backscatter communication system 100 may include more than two ambient backscatter transceivers, and ambient backscatter communication may occur between two or more of the ambient backscatter transceivers. In some embodiments, the ambient backscatter transceivers may, prior to transmitting, use carrier sense to detect a transmission from another ambient backscatter transceiver in order to avoid interfering transmissions between the ambient backscatter transceivers.

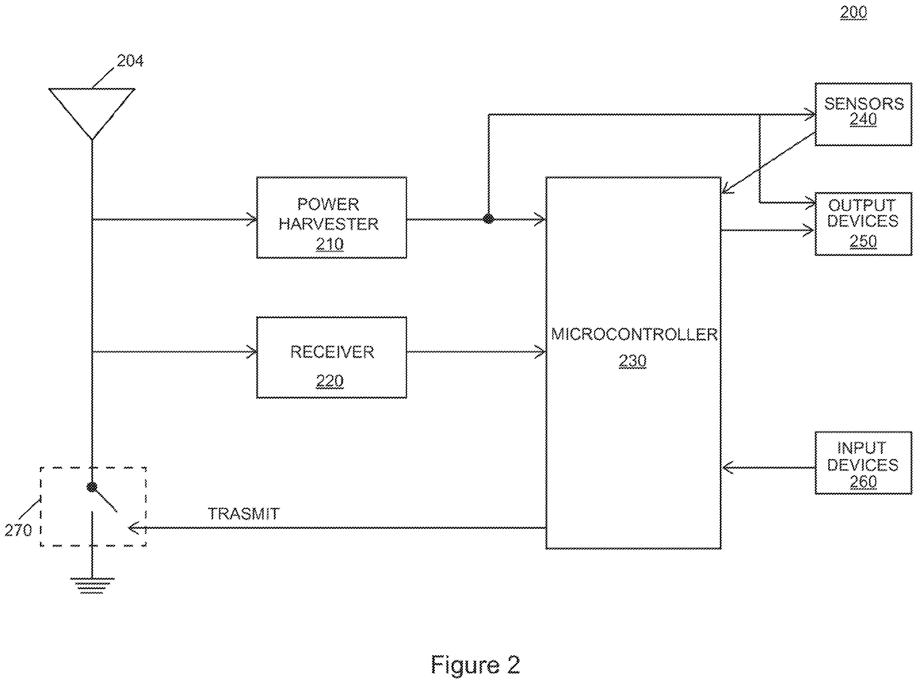

Figure 2 is a block diagram of an ambient backscatter transceiver 200 in accordance with embodiments of the present disclosure. The ambient backscatter transceiver 200 may include, for example, an antenna 204 coupled to a power harvester 210, a receiver 220, and a transmitter 270. The power harvester 210 may be configured to generate power from an ambient RF signal received via the antenna 204, and provide the power to a microcontroller 230, sensors 240, and output devices 250. The amount of power that the power harvester 210 is able to harvest from the ambient RF signal may be based on the range and broadcast power of the ambient RF signal. In some examples, the power harvester 210 may harvest at least 60 $\mu$W of power from the ambient RF signal. In other embodiments, the power harvester 210 may harvest up to 3 mW from the ambient RF signal. The receiver 220 may demodulate a backscattered ambient RF signal received via the antenna 204, and provide the demodulated signal to the microcontroller 230. The microcontroller 230 may process the demodulated signal from the receiver 220 to retrieve the data. In some embodiments, the microcontroller may store the data, control the output devices 250 based on the retrieved data, and/or may respond to a transmitting ambient backscatter transceiver. The microcontroller 230 may also receive input data from the sensors 240 and/or input devices 260. Based on the input data, the microcontroller 230 may control the transmitter 270 to modulate a backscatter of the ambient RF signal via the antenna 204 to transmit the data. The ambient backscatter transceiver 200 may be used to implement the ambient backscatter transceivers 120(1-2) of Figure 1.

The power harvester 210, receiver 220, and transmitter 270 are all connected to a single antenna 204 in Figure 2. The receiver 220 and transmitter 270 may use modulated backscattering of an ambient RF signal to communicate with one or more other ambient backscatter transceiver 200. The power harvester 210 may harvest energy from the ambient RF signal, and may provide the harvested energy to the powder the microcontroller 230 (e.g., micro-controller), sensors 240, and output devices 250. The power harvester 210, receiver 220, and transmitter 270 may operate independent of each other. While the transmitter 270 is actively modulating a backscattered ambient RF signal, the power harvester 210 and receiver 220 may capture limited power/signals.

In operation, the ambient backscatter transceiver 200 may transmit data by modulating a backscatter transmission of an ambient RF signal. The ambient backscatter transceiver 200 may also receive data by decoding modulation of a backscattered ambient RF signal. As previously described, backscattering transmission is achieved by changing the impedance of the antenna 204 via the transmitter 270 in the presence of an ambient RF signal. The microcontroller 230 may control the transmitter 270 to modulate the impedance of the antenna 204 and cause a change in the amount of energy of the ambient RF signal reflected by the antenna 204. For example, the microcontroller 230 may receive data from the sensors 240 or the input devices 260 (e.g., respond to a communication received from another ambient backscatter transceiver), and may modulate the transmitter 270 to encode the received data by modulating a backscatter of the ambient RF signal to produce the backscattered ambient RF signal that may be received by another ambient backscatter transceiver. Further, the receiver 220 may demodulate a received backscattered ambient RF signal from another ambient backscatter transceiver to provide outpout bits, and provide the output bits to the microcontroller 230. The microcontroller 230 may decode the output bits to retrieve data. In some embodiments, the microcontroller 230 may control the output devices 250 based on the decoded data. In some embodiments, the power harvester 210 may be the sole power source for the ambient backscatter transceiver 200. The power harvester 210 may harvest power from the ambient RF signal and provide the harvested power to power the microcontroller 230, sensors 240, and output devices 250.

In some embodiments, the antenna 204 includes a dipole antenna. The transmitter 270 may include a switching device (e.g., a transistor) connected across the two branches of the antenna 204. The input signal to the transmitter 270 from the microcontroller 230 may be modulated between a logical high value and a logical low value to encode a sequence of data bits. For example, when the input to the transmitter 270 is a logical low value, the transmitter 270 may be off and has no effect on the antenna 204 (e.g., presenting some nominal small amount of backscattering or non-reflected signal). When the input signal to the transmitter 270 is a logical high value, the transmitter 270 may be in a conducting state that shorts the two branches of the antenna 204, which results in a larger backscattered (e.g., reflected) signal amplitude. Thus, modulating of the transmitter 270 toggles the antenna 204 between the backscatter (reflective) and non-backscatter (non-reflective) states to convey bits to a receiver. In order to facilitate demodulating and decoding of the data encoded using the backscattered ambient RF signal at a receiving device (e.g., a receiver of another ambient backscatter transceiver), the modulation frequency of the transmitter 270 may be less than a modulation frequency of the ambient RF signal. This is because the ambient RF signal may already be encoded with data for another purpose (e.g., video data for a television channel), and encoding data at the same frequency may make it difficult or impossible to decipher the backscattered ambient RF signal data from the ambient RF signal data.

In an exemplary embodiment, implementation of the antenna 204 includes a 258 millimeter dipole antenna that is tuned for a subset of the ultra-high frequency (UHF) television (TV) band. The antenna may be a single antenna and/or omnidirectional with respect to a direction in which signals may be sent and received. Moreover, the receiver 220 may operate on only the input signal from a single antenna without the need for a second antenna or even an estimated second antenna signal. In other embodiments, implementation of the antenna 204 may include an antenna tuned for cellular, WiFi, or other frequencies. Other antenna topologies such as meandered antennas and folded dipoles may also be used. Further, RF switches may have a large difference between conducting and non-conducting impedance values for a specific frequency range, and little difference in other frequency ranges. This, a switching device of the transmitter 270 may be selected that has a large conducting and non-conducting impedance difference in the desired frequency range.

Note that the transmitter 270 and the antenna 204 may be capable of backscattering ambient RF signals across a tuned frequency band. In the example where the antenna 204 includes a 258 millimeter dipole antenna that is tuned for a subset of the ultra-high frequency (UHF) television (TV) band, the subset of the UHF frequency band may include a subset of frequencies that includes multiple channels. For example, in advanced television systems committee (ATSC) standards, each TV channel has a 6 MHz bandwidth with different TV channels allocated to adjacent nonoverlapping frequencies. The transmitter 270 and the antenna 204 may be capable of backscattering a signal of any one of multiple channels as long as the channel frequency falls within the tuned frequency band of the transmitter 270 and the antenna 204.

The receiver 220 may receive and demodulate the backscattered ambient RF signal to provide output bits. As explained above, because the ambient RF signal is already encoded with information (e.g., video data for a television channel), reliably decoding additional data from the backscattered ambient RF signal may be difficult. Additionally, in some embodiments it is desired to decode the backscattered ambient RF signal using circuitry that requires little or no external power (e.g., without using power-hungry hardware components such as ADCs and oscillators). An example is described herein illustrating how a backscattered ambient RF signal can be demodulated and decoded using a conventional digital receiver. As explained above, ambient RF signals (e.g., TV and cellular transmissions) may be encoded with information (e.g. TV and/or cellular data) that is not controllable. Because the ambient RF signal is modulated based on encoded data, the instantaneous power level is constantly fluctuating based on the encoded data. Thus, the receiver 220 may be capable of decoding the backscattered ambient RF signal in the presence of the ambient RF signal with fast changing power levels.

The following example is based on an assumption of a digital receiver that samples the analog signal and performs demodulation and decoding in the digital domain. As explained above, the transmitter 270 may modulate a backscatter of the ambient RF signal at a lower frequency than the modulation frequency of the ambient RF signals. Based on the two different frequencies, the receiver 220 may separate the two signals (e.g., the backscattered ambient RF signal from the ambient RF signal) by leveraging the difference in communication frequencies. Using the television ambient RF signal as an example, since the ambient RF signals encode information at a bandwidth of 6 MHz, the transmitter 270 may backscatter information at a lower frequency (e.g., longer time period) than the frequency at which ambient TV signals change. At the receiver 220, data encoded in the backscattered ambient RF signal is extracted using averaging mechanisms. Because the wideband ambient TV signals change at a faster rate than rate of change of the backscattered ambient RF signal (e.g., adjacent samples in TV signals tend to be more uncorrelated than the adjacent samples of the backscattered ambient RF signal). Therefore, by averaging a received signal across multiple samples, the variations in the ambient TV signals are masked, which allows the receiver 220 to decode the backscattered ambient RF signal. In the context of a digital receiver that samples the received signal at the Nyquist-information rate of the ambient TV signal, the received samples, $y[n]$, can then be expressed as a combination of the ambient TV signals and the backscattered ambient RF signal, e.g.:

$$y[n] = x[n] + \alpha B[n]x[n] + w[n]$$

where $x[n]$s are the samples corresponding to the ambient TV signal as received by the receiver, $w[n]$ is the noise, $\alpha$ is the complex attenuation of the backscattered ambient RF signal relative to the TV signals, and $B[n]$ are the bits transmitted by the transmitter 270. Since the receiver samples at the ambient TV Nyquist frequency, the adjacent samples in $x[n]$ are uncorrelated, Now, if the backscatterer conveys information at a 1/N fraction of the rate, then $B[Ni + j]$s are all equal for $j$ = I $to$ N. If the receiver 220 averages the instantaneous power in the $N$ receiver samples corresponding to a single backscattered bit, then we get:

$$\frac{1}{N}\sum_{i=1}^{N}|y[n]|^2 = \frac{1}{N}\sum_{i=1}^{N}|x[n] + \alpha Bx[n] + w[n]^2|$$

where $B$ is either '0' or '1', Since the ambient TV signal, $x[n]$, is uncorrelated with noise $w[n]$, the equation can be rewritten as:

$$\frac{1}{N}\sum_{i=1}^{N}|y[n]|^2 = \frac{|1+\alpha B|^2}{N}\sum_{i=1}^{N}|x[n]^2| + \frac{1}{N}\sum_{i=1}^{N}|w[n]|^2$$

Assuming $P$ is the average power in the received ambient TV signal, e.g.,

$$P = \frac{1}{N}\sum_{i=1}^{N}|x[n]^2|$$

The noise aside, the average power at the receiver 220 may be $|1+\alpha|^2*P$ when the backscattered ambient RF signal being reflected and $P$ when the backscattered ambient RF signal is not being reflected. The receiver 220 may be able to distinguish between the two power levels, $|1 + \alpha|^2*P$ and $P$, to decode the information from the backscattered ambient RF signal. Thus, even in the presence of changes in the ambient TV signal, the receiver 220 may be able to decode information from the backscattered ambient RF signal.

In an example operation, a transmitter (e.g., the transmitter 270 and the microcontroller 230 of another ambient backscatter transceiver 200) may be set to transmit an alternating sequence of ones and zeros (e.g., reflecting and not reflecting) at a rate of 1 kilobits per second (Kbps). By averaging the received power levels over X number of samples, the effect of the fast-varying ambient TV signal may be reduced. This may allow the receiver to decipher two average power levels in the backscattered ambient RF signal that can be used to decode the backscattered information.

Modulating a backscatter of the ambient RF signal may cause either an increase or a decrease in the average power of the received backscattered ambient RF signal. Specifically, the channel, $\alpha$, is a complex number and hence $|1 + \alpha|$ can be either less than or greater than one. Thus, a '0' bit may be either a lower power than the average power $P$, or a higher power than the average power $P$. This is because the additional multi-path (e.g., the backscattered ambient RF signal) created by the backscattering transmitter (e.g., the transmitter 270 of another ambient backscatter transceiver 200) can either constructively or destructively interfere with the existing ambient RF signal. To mitigate this problem, differential coding may be used to eliminate requiring knowledge of mapping between the power levels and the bits.

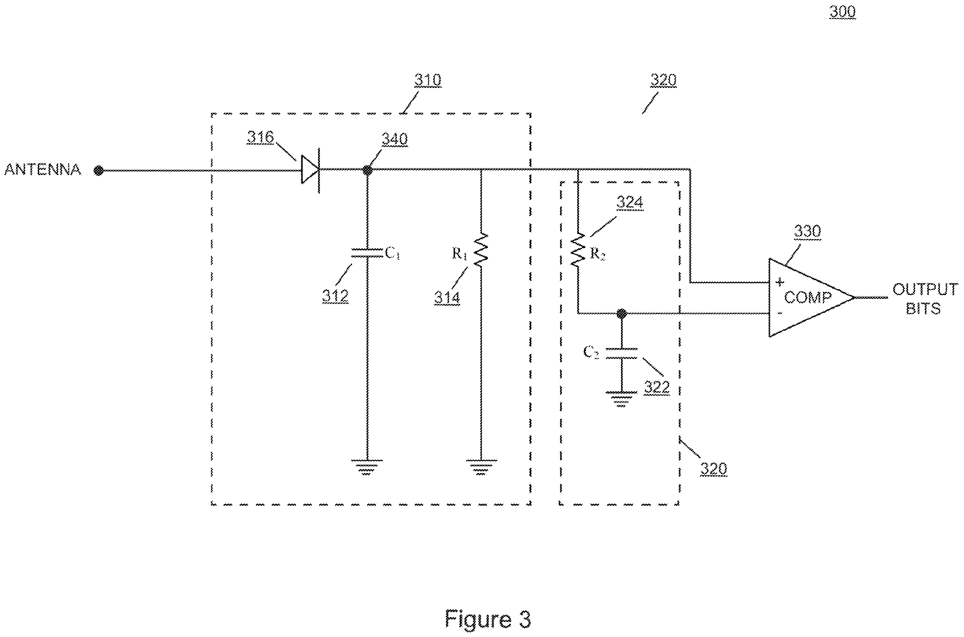

The above description generally assumes that the receiver 220 may receive digital samples on which it can perform operations such as averaging and comparison of power levels. However, acquiring digital samples of the ambient RF signals may require an analog-to-digital converter (ADC), which consumes a large amount of power, and is typically avoided in ultra-low power designs. Thus, the receiver 220 may be implemented using analog circuitry that mimics or emulates the digital receiver operation, as depicted in Figure 3. Specifically, embodiments of the receiver 220 may be implemented in analog circuitry only, including those in which the receiver consists of components such as those depicted in Figure 3. In some embodiments, the receiver 220 may consume less than $1\mu$W of power, or less than $0.6\mu$W of power.

The receiver 300 of Figure 3 may be used to implement the receiver 220 of Figure 2. As shown in Figure 3, the receiver 300 may include an averaging circuit 310 and a threshold circuit 320. The receiver 300 may include two main circuits: e.g., an averaging circuit 310 that smoothes out the natural variations in the ambient RF signal and a threshold circuit 320 that computes the threshold between the two levels and compares the incoming signal level with the threshold, to output bits. Outputs of the averaging circuit 310 and the threshold circuit 320 may be provided to inputs of the comparator 330, which provides output bits based on the inputs.

The averaging circuit 310 may be implemented using an envelope detector to smooth/average out the natural variations in the ambient RF signal. As shown in Figure 3, the averaging circuit 310 may include a diode 316 connected to a capacitor C1 312, in parallel with a resistor R1 314. The diode 316 allows current to How in one direction to the node 340. When the input voltage of the diode 316 is greater than the voltage of the node 340, the diode 316 provides the input voltage to the node 340 to charge the capacitor C1 312. When the input voltage of the diode 316 is lower than the voltage of the node 340, the diode 316 does not provide the input voltage to the node 340, and the resistor R1 314 slowly dissipates the charge stored on the diode 316, lowering the voltage at the node 340. The rate of drop of voltage is determined by the product $R1{*}C1$. Thus, by picking approximate values of the resistor R1 314 and the capacitor 312, the above circuit may average the fast variations in the ambient RF signal, but preserve the slow variations of backscattered ambient RF signal. The node 340 may be coupled to a first input of the comparator 330.

The threshold circuit 320 may include a resistor R2 324 and a capacitor C2 322. The resistor R2 324 may be coupled between the node 340 and a second input of the comparator 330 and the capacitor C2 322 may be coupled between the second input of the comparator 330 and a reference node (e.g., a ground node). The comparator 330 may provide output bits based on the first input and the second input.

In operation, the threshold circuit 320 establishes a threshold value that is a rolling average over a time period greater than a time period of a backscatter modulation frequency. In principle, a digital receiver with an ADC can distinguish between the two signal levels by processing of the digital samples. In an example where two signals have different voltages, $V_0$ and $V_1$, wherein $V_1 > V_0$ and where $V_0$ and $V_1$ correspond to the power levels for the '0' and '1' bits. To distinguish between the $V_0$ and $V_1$, the receiver 300 would first compute a threshold value, which may be the average of the two signal voltage levels. When the received signal is greater than the threshold, the digital receiver may conclude that the received signal is $V_1$. Otherwise, the digital receiver may conclude that the received signal is $V_0$.

However, since the receiver 300 may include a low-power receiver design, the averaging circuit 310 and the threshold circuit 320 may emulate the operation of an ADC using analog circuitry. The receiver 300 may include RC circuitry in the averaging circuit 310 and the threshold circuit 320. The averaging circuit 310 may include the resistor R1 314 and the capacitor C1 312 to perform averaging over a time period longer than a time period associated with the modulation of the ambient RF signal, but less than a time period associated with the backscatter modulation frequency, to provide the average value. The threshold circuit 320 may include the resistor R2 324 and the capacitor C2 322 to perform averaging over a time period longer than a time period associated with the backscatter modulation frequency to provide the threshold value. The comparator 330 compare the threshold value from the threshold circuit 320 and the average signal from the averaging circuit 310, and output either a '0' or a '1' to indicate which of the two values is larger. Thus, the comparator 330 may effectively perform the function of a one bit ADC, but consuming less power than an ADC.

The frequency of the backscattered ambient RF signal may be used to determine the RC values for the averaging circuit 310 and the threshold circuit 320. Specifically, a receiver 300 receiving bits at 10 Kbps requires a different RC circuit than one at 1 Kbps. This may be because the frequency of the backscattered ambient RF signal determines how much time each bit occupies on a channel. Generally, the lower the backscattered ambient RF signal frequency, the more averaging required to determine the threshold value. In some embodiments, the values of the capacitor C1 312, resistor R1 314, capacitor C2 322, and resistor R2 324 are configurable (e.g. using a programmable capacitor and/or resistor) based on the desired frequency of the backscattered ambient RF signal.

The maximum practical distance between two transceivers able to receive each other's backscattered communications may be determined in some examples based on a voltage difference detection capability of the comparator 330. As two ambient backscatter transceivers (e.g., the ambient backscatter transceivers 120(1-2) of Figure 1), move farther apart, the backscattered ambient RF signal becomes more attenuated at the receiver 300. The comparator 330 may only be capable of detecting voltage differences between the first input and the second input that exceed a minimum gap threshold. The minimum gap threshold of the comparator 330 may be used to determine the maximum distance at which two ambient backscatter transceivers can reliably communicate with each other. In some embodiments, the minimum gap threshold is 2.4 mV.

The network stack design for ambient backscatter communication may be integrated with the properties of the circuits and the previously described with reference to Figures 1-3. In the following example, described ambient backscatter transceivers may be implemented using the ambient backscatter transceivers 120(1-2) of Figure 1, and described transmitters may be implemented using the ambient backscatter transceivers 120(1-2) of Figure 1 and/or the microcontroller 230 and/or transmitter 270 of Figure 2. Additionally, described microcontrollers may be implemented using the ambient backscatter transceivers 120(1-2) of Figure 1 and/or the microcontroller 230 of Figure 2, and described receivers may be implemented using the ambient backscatter transceivers 120(1-2) of Figure 1, the receiver 220 of Figure 2, and/or the receiver 300 of Figure 3. The physical layer for ambient backscatter communication generally determines modulation and coding schemes used to encode and transmit data via the backscattered ambient RF signal, which may be used to detect packets and bit boundaries.

As previously described, example transmitters described herein may work by switching the antenna between reflecting and non-reflecting states. Doing so effectively creates an ON-OFF keying modulation However, the backscattered ambient RF signal could either constructively or destructively interfere with the ambient TV signal For example, depending on a location of the receiver, a '1' bit could appear as either an increase or a decrease in the received power. In order to overcome this limitation, the ambient backscatter transceiver may use biphase space encoding (FM0). FM0 encoding may turn every bit into two symbols and may encode information using symbol transitions. For example, FM0 has a symbol transition at the beginning of every bit period, along with an additional mid-bit transition to represent a '1', and no such transition in the '0' bit. Thus, the bits are encoded in the backscattered ambient RF signal using transitions in the power level, rather than the actual power levels.

At the beginning of each packet transmission, ambient backscatter transceivers, such as the ambient backscatter transceivers 120(1-2), transmit a known preamble. The receiver may detect the preamble using bit-level correlation (e.g., at a microcontroller). Because an ambient backscatter transceiver may not know when another nearby ambient backscatter transceiver is transmitting, a microcontroller of the ambient backscatter transceiver may only begin detecting a packet when the comparator (e.g., the comparator 330 of Figure 3) detects bit transitions. The comparator may operate using very little power, and has the built-in minimum gap threshold before it is capable of detecting bit transitions. It is only when the power difference crosses the minimum gap threshold in some examples that an interrupt may be sent to the microcontroller to wake the microcontroller up from an idle state in order to perform the bit-level correlation of the preamble. Because the averaging circuit 310 of Figure 3 masks the large variations in the ambient RF signal, it is unlikely that an ambient RF signal alone may maintain a power level long enough to create a detectable change power level at the comparator 330.

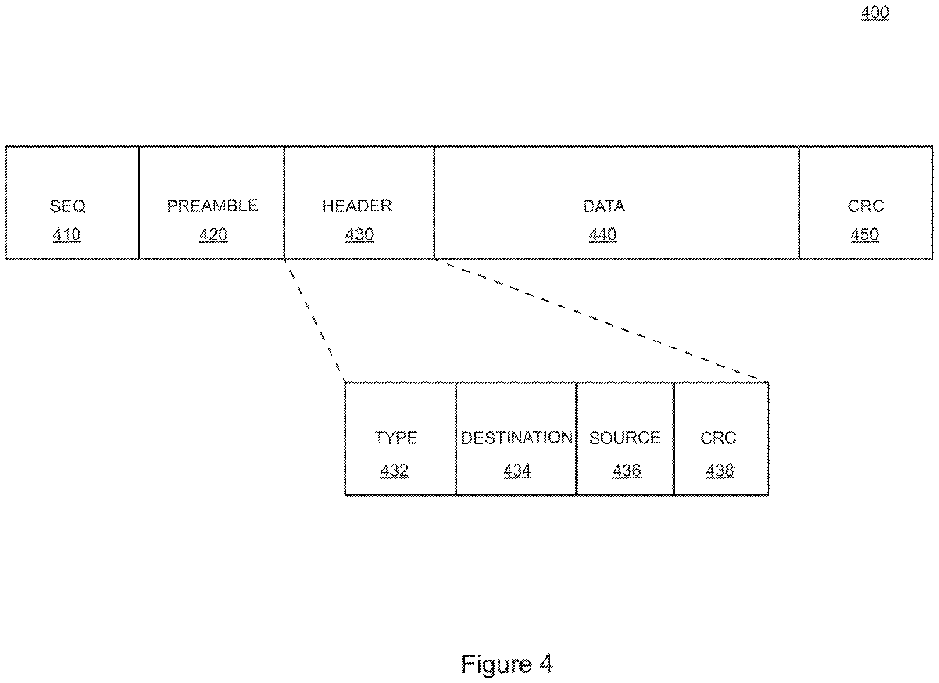

Data may be transmitted back and forth between ambient backscatter transceivers using any data packet structure. Figure 4 depicts an exemplary structure of a packet 400 used for ambient backscatter communication between ambient backscatter transceivers. The packet 400 may include an initial bit sequence 410 followed by a preamble 420. The preamble 420 may be followed by a header 430 and data 440. The packet 400 may include a cyclic redundancy code (CRC) 450 at the end for error checking.

Starting with the bit sequence 410 and the preamble 420, the transmitter may transmit the bit sequence 410 followed by the preamble 420 in order to allow the ambient backscatter transceiver sufficient time to wake the microcontroller for detection of the packet. In some embodiments, the bit sequence 410 may be an alternating '0-1' bit sequence. The alternating bit sequence may be long enough (e.g., 8 bits) to wake up the microcontroller 230 to begin detection of bit boundaries and framing.

The preamble 420 may be used by the receiver to detect the beginning of a packet. The preamble 420 may be followed by the header 430 containing information about the packet. The header 430 may include a type 432 that indicates a type of packet (e.g., data/ACK), a destination 434 and source 436 to indicate destination and source addresses (e.g., of the ambient backscatter transceivers). In some embodiments, the header 430 may include a length field after the source 436. The header 430 may further include a CRC 438 that is used by the microcontroller (e.g., the microcontroller 230 of Figure 2) to detect bit errors in the received header 430. After the header 430, the packet 400 further includes the data 440. The packet 400 also includes a CRC 450 that can be used by the receiver to detect bit errors from the received data 440. In some examples, the data 440 may also be protected using simple error correction codes that do not require consumption of significant power (e.g., hamming codes, repetition codes, etc.) The receiver may successfully receive a packet when both CRC checks based on the CRC 438 and the CRC 450 pass. The receiving ambient backscatter transceiver may transmit an acknowledgment packet to the transmitting ambient backscatter transceiver within a preset time responsive to successively receiving a data packet. The preset time may be determined based on the time it takes to successfully decode a data packet at the receiving ambient backscatter transceiver, and switch to a transmitting state.

The ambient backscatter transceivers may have an ability to communicate with each other wirelessly, rather than being a one-way communication. Thus, each ambient backscatter transceiver may be capable of performing carrier sense to detect packet transmissions (preamble correlation), and detect energy in the middle of a packet transmission (energy detection) from another ambient backscatter transceiver.

In an example, the ambient backscatter transceivers may use carrier sense to arbitrate a wireless medium between transmitters of the ambient backscatter transceivers using an averaging property of the comparator (e.g., the comparator 330 of Figure 3). For example, in the absence of a transmitting ambient backscatter transceiver, the receiver, using the output of the comparator, may detect that the ambient RF signal is constant. This may be because, as previously described, the comparator has a minimum threshold below which it does not register any changes. Since the averaging circuit and the threshold circuit (e.g., the averaging circuit 310 and threshold circuit 320 of Figure 3) averages rapid variations in the ambient RF signal over a period of time, the rapid signal changes in the ambient RF signal may be masked, and the small variations that result from the averaging may remain below a threshold of the comparator. Thus, in the absence of a nearby backscattering ambient backscatter transceiver, the comparator typically outputs either a constant sequence of ones or a constant sequence of zeros. A nearby transmission from another ambient backscatter transceiver, on the other hand, may result in changes that are greater than the threshold of the comparator, and hence results in changing bits at the output of the comparator. In embodiments where FM0 encoding is used, the transmitted bits have an equal number of ones and zeros, the comparator outputs an equal number of ones and zeros. Thus, by comparing the number of ones and zeros allows the receiver to distinguish between the presence and absence of a backscatter transmission. In some examples, the receiver may perform energy detection using the following equation:

$$D = 1 - \frac{|\#ones - \#zeroes|}{\#ones + \#zeroes} \sum_{i=1}^{N} |x[n]^2|$$

where #*ones* and #*zeros* denote the number of ones and zeroes, respectively, detected at the receiver. In the presence of a transmitting ambient backscatter transceiver that encodes data using the FM0 encoding scheme, an average number of ones and zeros detected by the receiver of a receiving ambient backscatter transceiver may be approximately equal, which makes *D* approximately one. Conversely, in the absence of a transmitting ambient backscatter transceiver, the bits detected by the receiver of a receiving ambient backscatter transceiver may be either mostly ones or mostly zeros, which makes *D* approximately zero, In some embodiments, a transmitting ambient backscatter transceiver may only perform carrier sense before it begins transmitting. This may reduce power consumption by the ambient backscatter transmitter.

Other modulation and carrier sense schemes may be used to encode the data for ambient backscatter transmission via the ambient backscatter transceivers. The data of a transmitted data packet may be generated from or based sensor data, input data, or data received from another ambient backscatter transceiver.

From the foregoing it will be appreciated that although specific embodiments of the technology have been described herein for purposes of illustration, various modifications may be made without deviating from the scope of the technology. Also, in some embodiments the microcontroller can be omitted, or the battery can be larger. Further, certain aspects of the new technology described in the context of particular embodiments may be combined or eliminated in other embodiments. Moreover, while advantages associated with certain embodiments of the technology have been described in the context of those embodiments, other embodiments may also exhibit such advantages, and not all embodiments need necessarily exhibit such advantages to fall within the scope of the technology. Accordingly, the disclosure and associated technology can encompass other embodiments not expressly shown or described herein. Thus, the disclosure is not limited except as by the appended claims.

**Claims**

1. A system (100) comprising:
   an ambient backscatter transceiver (200) comprising:

   an antenna (204) configured to receive a backscattered ambient radio frequency (RF) signal; and
   a demodulator (220) coupled to the antenna (204), wherein the demodulator is configured to demodulate the backscattered ambient RF signal to retrieve first data,
   **characterized in that** the backscattered ambient RF signal is an ambient RF signal backscattered at a first frequency, wherein the ambient RF signal is modulated at a second frequency to provide other data ; and
   a respective power harvest circuit (210) configured to harvest energy from the ambient RF signal, wherein the harvested energy is used to power the ambient backscatter transceiver (200) for demodulation of the backscattered ambient RF signal to retrieve first data.

2. The system of claim 1, wherein the ambient backscatter transceiver (200) is a first ambient backscatter transceiver, the system further comprising a second ambient backscatter transceiver configured to transmit the first data in the backscattered ambient RF signal by modulating a backscatter of the ambient RF signal at the first frequency.

3. The system of claim 2, wherein the first ambient backscatter transceiver (200) is further configured to transmit third data in a second backscattered ambient RF signal by modulating a backscatter of the ambient RF signal at the first frequency.

4. The system of claim 3, wherein the system further comprises a plurality of ambient backscatter transceivers (200), each of the plurality of ambient backscatter transceivers comprising an antenna (204) that is configured to receive the backscattered ambient RF signal and to demodulate the backscattered ambient RF signal to retrieve first data.

5. A method, comprising:

receiving an ambient radio frequency (RF) signal at an antenna (204), wherein the ambient RF signal is encoded with first data via modulation at a first frequency;
modulating a backscatter of the ambient RF signal at a second frequency via the antenna (204) to provide a first backscattered ambient RF signal encoded with second data;
receiving a second backscattered ambient RF signal at the antenna (204), wherein the second backscattered ambient RF signal is encoded with third data via backscatter modulation of the ambient RF signal at the second frequency;
demodulating the second backscattered ambient RF signal to generate output bits; and
decoding the output bits at a microcontroller (230) to retrieve the third data; harvesting energy from the ambient RF signal to power the microcontroller (230).

6. The method of claim 5, further comprising, prior to modulating the backscatter of the ambient RF signal via the antenna (204) to provide the first backscattered ambient RF signal encoded with the second data, detecting whether another backscattered ambient RF signal is being transmitted.

7. The method of claim 6, wherein detecting whether the other backscattered ambient RF signal is being transmitted comprises detecting alternating reflections and non-reflections of the backscattered ambient RF signal.

8. The method of claim 5, further comprising receiving sensor data from a sensor (240), wherein the second data is based on the sensor data.

9. The method of claim 5, wherein the first frequency is greater than the second frequency.

**Patentansprüche**

1. System (100), das umfasst:
einen Sender/Empfänger (200) mit Umgebungsrückstreuung, der umfasst:

eine Antenne (204), die dazu ausgelegt ist, ein rückgestreutes Hochfrequenz(HF)-Umgebungssignal zu empfangen; und
einen Demodulator (220), der mit der Antenne (204) gekoppelt ist, wobei der Demodulator dazu ausgelegt ist, das rückgestreute HF-Umgebungssignal zu demodulieren, um erste Daten zu erhalten,
**dadurch gekennzeichnet, dass** das rückgestreute HF-Umgebungssignal ein HF-Umgebungssignal ist, das bei einer ersten Frequenz rückgestreut wird, wobei das HF-Umgebungssignal bei einer zweiten Frequenz moduliert wird, um andere Daten bereitzustellen; und
eine entsprechende Energiegewinnungsschaltung (210), die dazu ausgelegt ist, Energie aus dem HF-Umgebungssignal zu gewinnen, wobei die gewonnene Energie dafür verwendet wird, den Sender/Empfänger (200) mit Umgebungsrückstreuung zur Demodulation des rückgestreuten HF-Umgebungssignals mit Energie zu versorgen, um erste Daten zu erhalten.

2. System nach Anspruch 1, wobei der Sender/Empfänger (200) mit Umgebungsrückstreuung ein erster Sender/Empfänger mit Umgebungsrückstreuung ist, wobei das System ferner einen zweiten Sender/Empfänger mit Umgebungsrückstreuung umfasst, der dazu ausgelegt ist, die ersten Daten in dem rückgestreuten HF-Umgebungssignal durch Modulieren einer Rückstreuung des HF-Umgebungssignals bei der ersten Frequenz zu senden.

3. System nach Anspruch 2, wobei der erste Sender/Empfänger (200) mit Umgebungsrückstreuung ferner dazu ausgelegt ist, dritte Daten in einem zweiten rückgestreuten HF-Umgebungssignal durch Modulieren einer Rückstreuung des HF-Umgebungssignals bei der ersten Frequenz zu senden.

**4.** System nach Anspruch 3, wobei das System ferner eine Mehrzahl von Sender/Empfängern (200) mit Umgebungsrückstreuung umfasst, wobei jeder der Mehrzahl von Sender/Empfängern mit Umgebungsrückstreuung eine Antenne (204) umfasst, die dazu ausgelegt ist, das rückgestreute HF-Umgebungssignal zu empfangen und das rückgestreute HF-Umgebungssignal zu demodulieren, um erste Daten zu erhalten.

**5.** Verfahren, das umfasst:

Empfangen eines Hochfrequenz(HF)-Umgebungssignals an einer Antenne (204), wobei das HF-Umgebungssignal durch Modulation bei einer ersten Frequenz mit ersten Daten kodiert wird;
Modulieren einer Rückstreuung des HF-Umgebungssignals bei einer zweiten Frequenz über die Antenne (204), um ein erstes rückgestreutes HF-Umgebungssignal bereitzustellen, das mit zweiten Daten kodiert wird;
Empfangen eines zweiten rückgestreuten HF-Umgebungssignals an der Antenne (204), wobei das zweite rückgestreute HF-Umgebungssignal durch Rückstreumodulation des HF-Umgebungssignals bei der zweiten Frequenz mit dritten Daten kodiert wird;
Demodulieren des zweiten rückgestreuten HF-Umgebungssignals, um Ausgangsbits zu erzeugen; und
Dekodieren der Ausgangsbits an einem Microcontroller (230), um die dritten Daten zu erhalten;
Gewinnen von Energie aus dem HF-Umgebungssignal, um den Microcontroller (230) mit Energie zu versorgen.

**6.** Verfahren nach Anspruch 5, das vor dem Modulieren der Rückstreuung des HF-Umgebungssignals über die Antenne (204), um das erste rückgestreute HF-Umgebungssignal, das mit den zweiten Daten kodiert wird, bereitzustellen, ferner das Erfassen umfasst, ob ein weiteres rückgestreutes HF-Umgebungssignal gesendet wird.

**7.** Verfahren nach Anspruch 6, wobei das Erfassen, ob das weitere rückgestreute HF-Umgebungssignal gesendet wird, das Erfassen von abwechselnden Reflexionen und Nicht-Reflexionen des rückgestreuten HF-Umgebungssignals umfasst.

**8.** Verfahren nach Anspruch 5, das ferner das Empfangen von Sensordaten von einem Sensor (240) umfasst, wobei die zweiten Daten auf den Sensordaten basieren.

**9.** Verfahren nach Anspruch 5, wobei die erste Frequenz größer ist als die zweite Frequenz.


**Revendications**

**1.** Système (100) comprenant :
un émetteur-récepteur à rétrodiffusion ambiante (200) comprenant :

une antenne (204) configurée pour recevoir un signal radio fréquence (RF) ambiant soumis à une rétrodiffusion ; et
un démodulateur (220) couplé à l'antenne (204), dans lequel le démodulateur est configuré pour une démodulation du signal RF ambiant soumis à une rétrodiffusion dans le but d'extraire des premières données ;
**caractérisé en ce que** le signal RF ambiant soumis à une rétrodiffusion représente un signal RF ambiant qui a fait l'objet d'une rétrodiffusion à une première fréquence, dans lequel le signal RF ambiant a fait l'objet d'une modulation à une deuxième fréquence dans le but de fournir d'autres données ; et
un circuit respectif de récolte de puissance (210) configuré pour récolter de l'énergie à partir du signal RF ambiant ; dans lequel l'énergie récoltée est utilisée pour alimenter l'émetteur-récepteur à rétrodiffusion ambiante (200) à des fins de démodulation du signal RF ambiant soumis à une rétrodiffusion dans le but d'extraire des premières données.

**2.** Système selon la revendication 1, dans lequel l'émetteur-récepteur à rétrodiffusion ambiante (200) représente un premier émetteur-récepteur à rétrodiffusion ambiante, le système comprenant en outre un deuxième émetteur-récepteur à rétrodiffusion ambiante configuré pour une transmission des premières données dans le signal RF ambiant soumis à une rétrodiffusion par l'intermédiaire d'une modulation d'une rétrodiffusion du signal RF ambiant à la première fréquence.

**3.** Système selon la revendication 2, dans lequel le premier émetteur-récepteur à rétrodiffusion ambiante (200) est en outre configuré pour une transmission des troisièmes données dans un deuxième signal RF ambiant soumis à une rétrodiffusion par l'intermédiaire d'une modulation d'une rétrodiffusion du signal RF ambiant à la première fréquence.

**4.** Système selon la revendication 3, dans lequel le système comprend en outre un certain nombre d'émetteurs-récepteurs à rétrodiffusion ambiante (200), chacun desdits plusieurs émetteurs-récepteurs à rétrodiffusion ambiante (200) comprenant une antenne (204) qui est configurée pour la réception du signal RF ambiant soumis à une rétrodiffusion et pour la démodulation du signal RF ambiant soumis à une rétrodiffusion dans le but d'extraire des premières données.

**5.** Procédé comprenant le fait de :

recevoir un signal radio fréquence (RF) ambiant à une antenne (204), dans lequel le signal RF ambiant est encodé avec des premières données par l'intermédiaire d'une modulation à une première fréquence ; moduler une rétrodiffusion du signal RF ambiant à une deuxième fréquence par l'intermédiaire de l'antenne (204) afin d'obtenir un premier signal RF ambiant soumis à une rétrodiffusion, encodé avec des deuxièmes données ; recevoir un deuxième signal RF ambiant soumis à une rétrodiffusion à l'antenne (204) ; dans lequel le deuxième signal RF ambiant soumis à une rétrodiffusion est encodé avec des troisièmes données par l'intermédiaire d'une modulation de rétrodiffusion du signal RF ambiant à la deuxième fréquence ; démoduler le deuxième signal RF ambiant soumis à une rétrodiffusion dans le but de générer des bits de sortie ; et décoder les bits de sortie à un microcontrôleur (230) dans le but d'extraire les troisièmes données ; récolter de l'énergie à partir du signal RF ambiant dans le but d'alimenter le microcontrôleur (230).

**6.** Procédé selon la revendication 5, comprenant en outre le fait de, avant la modulation de la rétrodiffusion du signal RF ambiant par l'intermédiaire de l'antenne (204) afin d'obtenir le premier signal RF ambiant soumis à une rétrodiffusion, encodé avec les deuxièmes données, détecter le fait de savoir si un autre signal RF ambiant soumis à une rétrodiffusion a été transmis.

**7.** Procédé selon la revendication 6, dans lequel la détection du fait de savoir si l'autre signal RF ambiant soumis à une rétrodiffusion est en train d'être transmis comprend une détection des réflexions alternées et des non-réflexions du signal RF ambiant soumis à une rétrodiffusion.

**8.** Procédé selon la revendication 5, comprenant en outre le fait de recevoir des données de détection à partir d'un capteur (240) ; dans lequel les deuxièmes données se basent sur les données du capteur.

**9.** Procédé selon la revendication 5, dans lequel la première fréquence est supérieure à la deuxième fréquence.

100

RF SOURCE

110

AMBIENT
BACKSCATTER
TRANSCEIVER
120(1)

AMBIENT
BACKSCATTER
TRANSCEIVER
120(2)

Figure 1

Figure 2

EP 2 976 734 B1

14

- 204
- POWER HARVESTER 210
- RECEIVER 220
- MICROCONTROLLER 230
- SENSORS 240
- OUTPUT DEVICES 250
- INPUT DEVICES 260
- 270
- TRASMIT

Figure 3

| SEQ 410 | PREAMBLE 420 | HEADER 430 | DATA 440 | CRC 450 |
|---------|--------------|------------|----------|---------|

| TYPE 432 | DESTINATION 434 | SOURCE 436 | CRC 438 |
|----------|-----------------|------------|---------|

Figure 4

EP 2 976 734 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008131133 A1
- US 2007109121 A1